(19) Europäisches Patentamt

European Patent Office

Office européen des brevets

(11) Publication number: **0 273 355 B1**

# EUROPEAN PATENT SPECIFICATION

(45) Date of publication of patent specification: **15.07.92**  (51) Int. Cl.5: **B60B 35/16**, C21D 9/28

(21) Application number: **87118995.7**

(22) Date of filing: **22.12.87**

Divisional application 90124470.7 filed on 22/12/87.

(54) **A rear axlecase and methods of manufacturing thereof.**

(30) Priority: **24.12.86 JP 306326/86**

(43) Date of publication of application:
**06.07.88 Bulletin  88/27**

(45) Publication of the grant of the patent:
**15.07.92 Bulletin  92/29**

(84) Designated Contracting States:
**DE GB**

(56) References cited:
**DE-A- 3 402 272**

**AUTOMOTIVE ENGINEER, vol. 8, no. 5, October - November 1983, page 78, Southend-on-Sea, GB**

(73) Proprietor: **Isuzu Motors Limited
10-go, 22-ban, 6-chome, Minami-Ohi
Shinagawa-ku
Tokyo(JP)**

(72) Inventor: **Kuwahara, Toru Kawasaki Factory
Isuzu Motors Ltd 3-25-1, Tono-machi
Kawasaki-ku Kawasaki-shi Kanagawa(JP)**

(74) Representative: **Patentanwälte Kirschner & Grosse
Forstenrieder Allee 59
W-8000 München 71(DE)**

**Description**

1. Technical Field

The present invention relates to the rear axlecase, particularly to those reat axlecases which are mode of nodular graphite cast iron casting, having their endtubes of the axle housing improved in the material quality.

2. Background Art

The conventional construction of the automobile rear axlecase that houses a differential gear and the two axles that extend from the differential gear laterally both ways has been as follows:

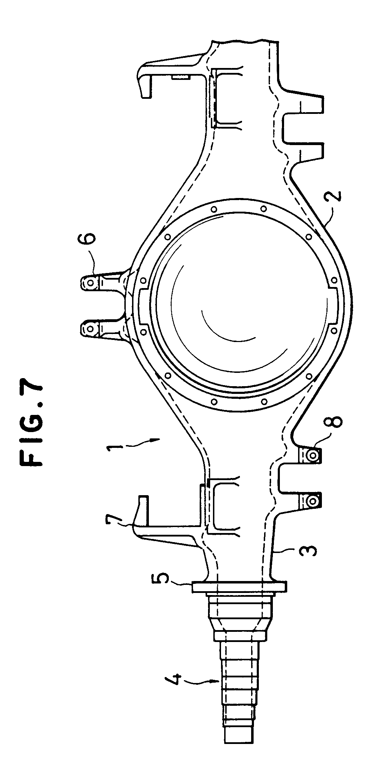

As shown in Fig. 7, which presents an example of conventional design, the rear axlecase 1 is made up mainly of a differential gear housing 2 and two axle housing 3, which extend laterally both ways from the differential gear housing 2. At either end of the axle housings 3, there is formed an endtube 4, and at the differential gear housing 2 side thereof, there is formed a brake flange 5. In the top part of aforesaid differential gear housing 2, there is formed one or more pieces of bracket 6. At a top part of each aforesaid axle housing 3, there is formed a spring seat 7, while at a bottom part thereof, there is formed one or more pieces of torquerod bracket 8. Here, the endtubes 4 are made of a casting of good mechanical properties, while most of other parts are press formed, and these members are assembled by welding into a complete rear axlecase 1.

In this example, because plural members are assembled by welding, not only the productivity is low, but the weldments are liable to become the weakness in the structural integrity. One further problem here is that, should a weldment be found deficient in strength, the only remedial measure possible would be redesigning to enlarge the fundamental dimensions, necessitating alteration of the form of the parts. Another problem is that, since press dies are expensive to make, this method is not amiable to flexible manufacturing.

In another example, attempts at overcoming these difficulties were made by resorting to a construction, in which aforesaid plural members were all cast into one integral body from a cast steel, or else, the differential gear housing 2 and the axle housing 3 were cast into one integral body from cast steel, and brackets 6 and the likes were attached thereto by means of bolts or welding, to be assembled into a complete rear axlecase 1.

The problems here are that, since the castability of cast steels is so poor, needing high casting temperatures and forming shrinkage cavities rather easily, that the requirements imposed on the casting mold are severe, raising the production cost, and that manufacture of thin wall articles is difficult, making weight reduction difficult.

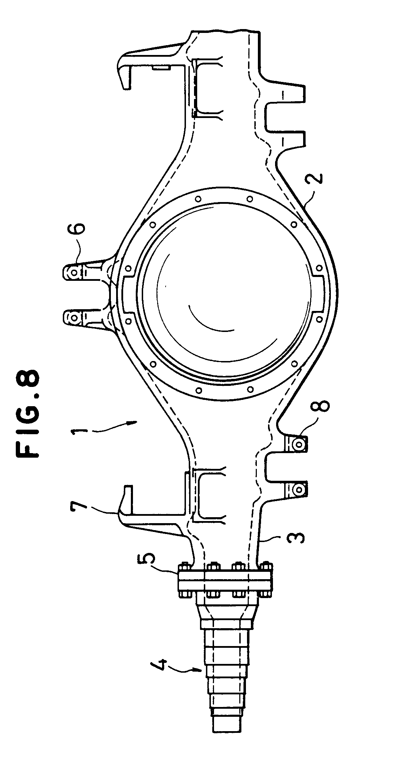

To solve these problems, yet another construction was devised. In this third conventional practice, an example of which is shown in Fig. 8, the endtubes 4 of the axle housing 3, which call for good toughness, are made from forging, which is known to have good mechanical properties, while the parts of the axle housing 3 other than the endtubes 4, whose deficiency in strength may be corrected by adjusting the form and dimensions, are cast into an integral body together with the differential gear housing 2 from nodular graphite cast iron, and these forgings and the nodular graphite cast iron casting are assembled with bolts.

The problem here is that, since welding of forgoings to nodular graphite cast iron castings is difficult, if not entirely impossible, by the technology available today, and since, even if successfully welded, the strength of weldment is insufficient, aforesaid forging part and casting part have to be joined by means of bolts, necessarily raising the production cost.

From the DE-A-3 402 272 a rear axlecase construction is known in which the differential gear housings and axle housings are cast from a nodular graphite cast iron integral casting.

However, it is desired on one hand that the housing rear axlecase is low in the hardness and on the other hand that the hardness of the end tube parts is strong and tough.

One proposal is to provide an induction hardened area within the part of the spindle, for example from Automotive Engineer, volume 8, no.5 , October/November 1983, page 78, Southend-on-Sea, Great Britain.

This method is very difficult and expensive and it is not possible to overcome the problem as described above.

SUMMARY OF THE INVENTION

This invention has been done to solve those problems mentioned above.

Namely, it is an objective of this invention to provide such a rear axlecase that it is low in the hardness and is ductible as a whole so that it will not fracture, even if got deformed, when it hits an object protruding from the road surface.

Another object of this invention is to provide such a rear axlecase that the hardness of its endtube parts is so raised above those of other parts as to make them strong and tough, so that said endtubes will not be damaged by the stress working on the axle.

Yet another objective of this invention is to provide such a rear axlecase that can be manufactured at a low cost by casting the differential gear housings and the axle housing into the integral body, thus dispensing with such assemblage work as welding or joining by bolts.

These objects are solved by rear axlecase in which the differential gear housings and the axle housing are cast from nodular graphite cast iron into an integral casting, and a hardened structure part is formed by high frequency quenching in each of the endtube parts of aforesaid axle housings.

BRIEF DESCRIPTION OF THE DRAWINGS

Figure 1 is a side view of the major part of the rear axlecase of this invention, illustrating a preferred embodiment of this invention;

Figure 2 is a set of schematic drawings, illustrating a manufacturing practice of the rear axlecase of this invention;

Figure 3 is a drawing, presenting an example set of design specifications of the rear axlecase of this invention;

Figure 4 is a drawing, showing the place of sampling the tension test piece;

Figure 5 is a drawing, showing the places onto which quenching is to be performed;

Figure 6 is a diagram, presenting the results of quenching;

Figure 7 is a side view of the major part of conventional rear axlecase, showing the first example therefor; and

Figure 8 is a side view of the major part of conventional rear axlecase, showing the third example therefor.

DESCRIPTION OF THE PREFERRED EMBODIMENTS

The preferred embodiments of the rear axlecase of this invention will now be disclosed in detail, referring to attached drawings.

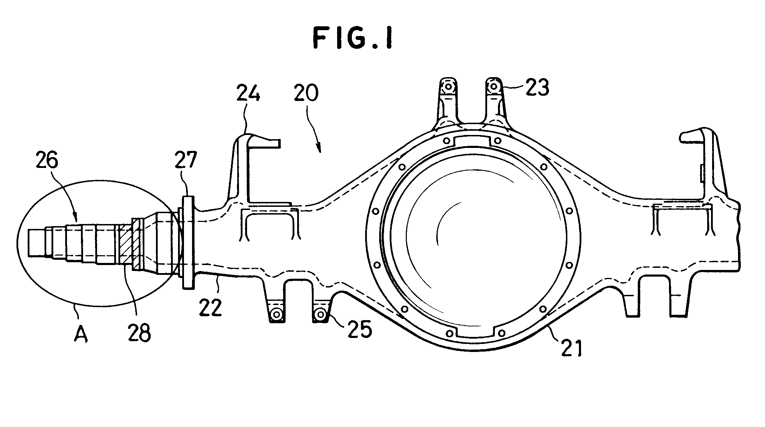

As shown in Fig. 1, the rear axlecase 20 consists mainly of a differential gear housing 21 of approximately spherical shape that houses the differential gear, and two axle housings 22 of cylindrical shape that extend laterally both ways from said differential gear housing 21, housing the trio axles which extend laterally both ways from said differential gear, aforesaid trio members, the differential gear housings 21 and the axle housing 22, being cast into an integral body from nodular graphite cast iron.

In the top part of each differential gear housing 21, there is provided one or more pieces of bracket 23, while in each axle housing 22, there is provided in its top part a spring seat 24 and in its bottom part is one or more pieces of torquerod bracket 25. Although aforesaid bracket 23, spring seat 24, and torquerod bracket 25 are integrally cast into one body together with the differential gear housing 21 and the axle housings 22 from nodular graphite cast iron in the present embodiment, they may be separate members to be attached by bolts.

In either end of aforesaid axle housing 22, there is formed an endtube 26, and at the differential gear housing 21 side thereof, there is formed a brake flange 27. In each of aforesaid endtubes 26, furthermore, there is formed a hardened structure part 28. In the present embodiment, said hardened structure 28 is formed by accelerating the cooling rate of the endtube 26 as a whole (the part designated by A in Fig. 1).

In the present embodiment the root part of the endtube 26 which corresponds to aforesaid hardened structure part 28 is subjected to high frequency quenching, on one hand, and the rear axlecase 20 as a whole be subjected to annealing, on the other hand. If said quenching is to be conducted before annealing, quenching is performed from a temperature in or near 970 ~ 980°C range, and annealing is performed at a temperature below the $A_1$ transformation point (about 720°C) - Such a heat treatment finishes-the structure of the root part of the endtube 26 (shown in Fig. 1 by hatching lines) in the tempered martensitic structure, while leaving other parts in more ductile pearlite structure.

If aforesaid quenching is to be conducted after annealing, on the other hand, annealing is performed at a temperature near 800°C, while quenching is performed from a temperature in or near 970 ~ 980°C range. Such a heat treatment finishes the structure of the root part of the endtube 26 (shown in Fig. 1 by hatching lines) in the martensitic structure, while leaving other parts in more ductile pearlite structure.

The particulars of quenching and annealing are to be decided upon in accordance with the incidental need, such as the kind of the nodular graphite cast iron to be used and the design strengths to be attained, but the ultimate construction in the present embodiment is that, after the rear axlecase 20 has been cast as an integral body, only the root parts of the two endtubes 26 of aforesaid axle housing 22 should be subjected to hardening treatment to form the hardened parts 28, while the whole rest of the casting should be in ductile structure.

The rear axlecasas 20 of this invention, having such construction as described above, are manufactured by following practice.

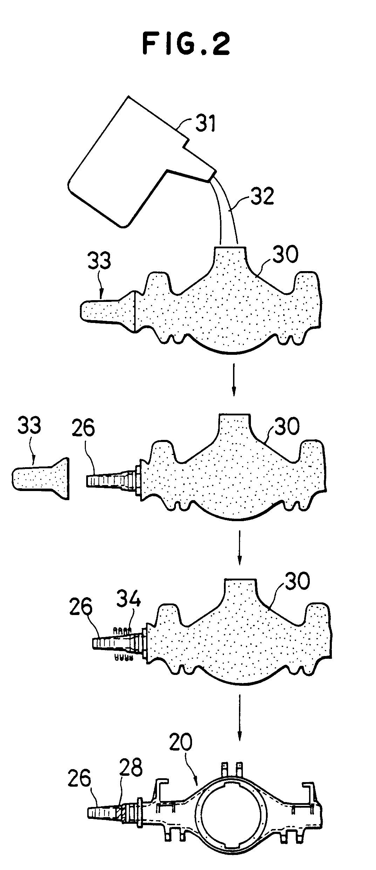

As illustrated in Fig. 2, a sand casting mold 30 is prepared so as to produce the differential gear housing 21 and the axle housing 22 in an integral casting. In the present embodiment, brackets 23 and likes are also integrated into the same mold. After completion of casting of the molten nodular graphite cast iron 32 made in a ladle 31, first that part 33 of the mold 30 which has served the making of the whole of the endtube 26 (the hatched part A in Fig. 1) is divided and removed, leaving the endtube 26 to cool naturally or be cooled forcibly so as to refine the granular structure to raise the strength and toughness, but the rest of the casting, Comprising the parts of the axle housing 22 other than the endtubes 26, the differential gear housing 21, and the brackets 23 and the likes, is all left in the mold 30, cooling as is so as to develop ductility.

Subsequently, the root part of each of the endtubes 26 of each axle housing 22 is subjected to high frequency quenching from a temperature in or near 970 ~ 980°C range by means of a high frequency quenching machine 34 into hard martensitic structure. Thereafter, the rest of the casting is taken out of the mold 30, and the whole body is annealed at a temperature below the $A_1$ transformation point.

As a result of this process, the root parts of the endtubes 26 are finished in a hard and tough tempered martensitic structure, while the rest are finished in a ductile pearlite structure.

In the practice described above, the order of the two heat treatments may be reversed, performing the whole body annealing first, then the high frequency quenching, where the annealing should be conducted at a temperature near 800°C, and the high frequency quenching be conducted from a temperature in or near 970 ~ 980°C range. As a result of this process, the root parts of the endtubes 26 are left in hard martensitic structure, while the rest is in ductile pearlite structure.

In either case, an endtube 26 that will not be damaged by the stress acting on the axle, which concentrates at the root part thereof, is formed. Since the parts other than aforesaid endtubes 26 of the integrally cast rear axlecase 20 are in the pearlite structure of a low hardness of $H_B$ = 150 or thereabout, on ther hand, good mechanical properties having an improved elongation value are realized, so that they will not fracture, even if got deformed, on contact with an object protruding from the road surface.

Here, the particulars of aforesaid high frequency quenching and annealing treatments should be decided upon in accordance with the kind of the nodular graphite cast iron to be used, the design strength to be attained, and other pertinent considerations.

Furthermore, since the use of nodular graphite cast iron in making the differential gear housings 21 and the axle housing 22 into an integral body ensures good castability, not only the wall thicknesses, hence the weight, of the rear axlecase 20 can be reduced substantially as a whole, but such assemblage works as welding or joining with bolts can be dispensed with, making it possible to manufacture the rear axlecase 20 at a low cost.

The foregoing statements have been verified by actually manufacturing a number of rear axlecases 20 according to this invention. A nodular graphite cast iron of a chemical composition shown in Table 1, which is equivalent to ASTM A536-84, was used.

Table 1

| Chemical Composition (percentage by weight) | | | | | | |
|---|---|---|---|---|---|---|
| C | Si | Mn | S | Cr | Cu | Mg |
| 3.42 | 2.50 | 0.28 | 0.005 | 0.033 | 0.21 | 0.04 |

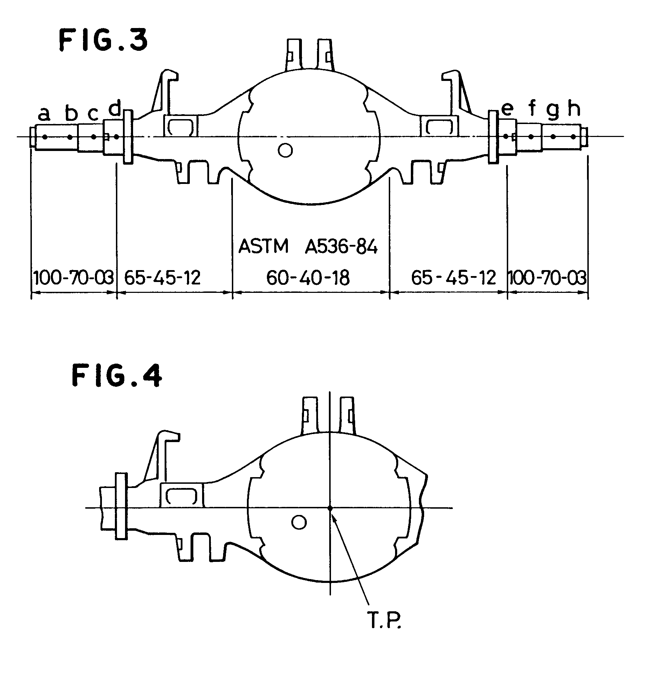

The design specifications were as given in Fig. 3, according to which the differential gear housings 21 should be 60-40-18 in ASTM A536-84, the parts of the axle housing 22 other than the endtubes 26 be 65-45-12, and the endtubes 26 be 100-70-03.

For a start, neither quenching treatment nor annealing treatment was performed on this rear axlecase 20. The surface hardnesses taken with a Brinell hardness tester at points a ~ h shown in Fig. 3 are presented in Table 2.

Table 2

| Results of Hardness Mesurement (in $H_B$) | | | | | | | | |
|---|---|---|---|---|---|---|---|---|
| Product ID No. | Measuring Position | | | | | | | |
| | a | b | c | d | e | f | g | h |
| None | 285 | 269 | 241 | 241 | 241 | 241 | 255 | 285 |
| 5 | 255 | 255 | 248 | 241 | 241 | 241 | 269 | 262 |
| 8 | 302 | 293 | 262 | 269 | 277 | 255 | 255 | 285 |
| 10 | 307 | 302 | 302 | 269 | 269 | 277 | 302 | 302 |
| 11 | 269 | 269 | 269 | 277 | 277 | 255 | 285 | 285 |
| 12 | 285 | 285 | 255 | 269 | 277 | 255 | 285 | 285 |
| 13 | 269 | 262 | 285 | 285 | 285 | 269 | 293 | 285 |
| 16 | 302 | 302 | 293 | 277 | 269 | 269 | 285 | 302 |
| 17 | 285 | 285 | 269 | 255 | 277 | 269 | 269 | 302 |
| 18 | 293 | 302 | 269 | 277 | 248 | 248 | 285 | 285 |

It will be seen that for each product the hardnesses of the endtubes 26 of the axle housing 22 fall in a hardness range of $H_B$ = 241 ~ 311, which is the specification of ASTM A536-84, 100-70-03. Thus, it was demonstrated that in this case the design specifications were amply satisfied without resorting to quenching treatment.

Nextly, a 4 mm$\phi$ size tension test piece, taken from the portion indicated in Fig 4 as T.P., gave in a tension test a tensile strength of 56 kgf/mm$^2$ and an elongation of 23 %, attesting to that ample ductility has been obtained in the part concerned.

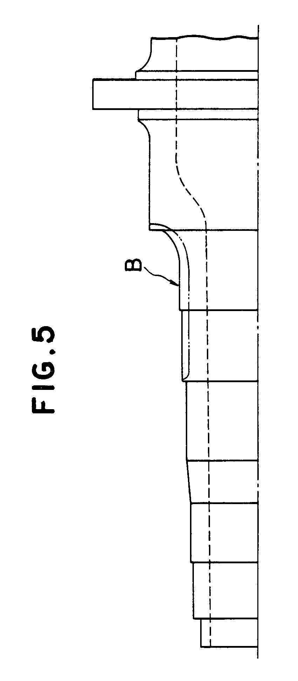

Furthermore, high frequency quenching was performed on the root parts of the endtubes 26 (indicated by B in Fig. 5) of the axle housing 22 for a set of specifications of the as-quenched hardness to be $H_{RC}$ 50 or above and the quenching depth to be 2 mm or more. Quenching was conducted by heating the part B of an endtube 26 for 5.5 seconds at 970 ~ 980°C by fully turning a half-circle induction coil, then cooling with water for 100 seconds. Subsequently, annealing was given at 200°C, which is below the A, transformation point.

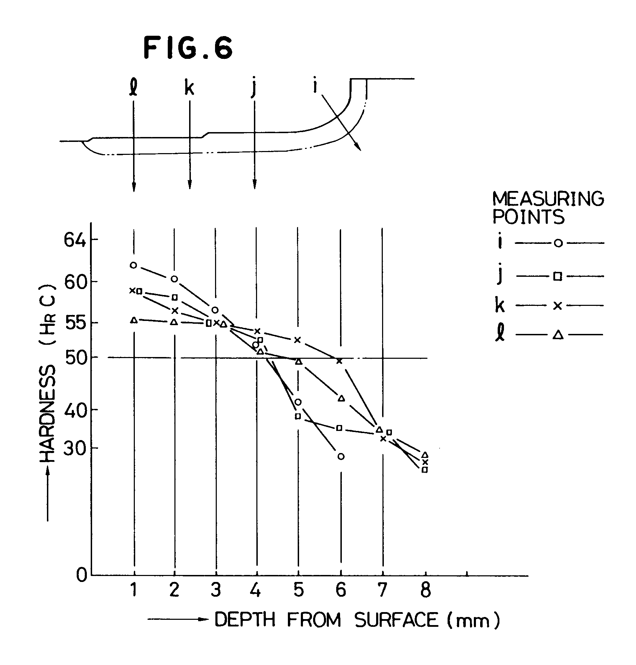

The results are depicted in Fig. 6 in terms of measurements taken with a Rockwell hardness tester (C scale) at points i ~ ℓ. It will be appreciated that the hardness of $H_{RC}$ 50 or above is kept well beyond a depth of 2 mm, indicating formation of martensitic structure therein.

## Claims

1. A rear axlecase characterized by the construction in which
   the differential gear housings and the axle housing are cast from a nodular graphite cast iron into an integral casting; and
   a hardened structure part is formed by high frequency quenching in each of the endtube parts or aforesaid axle housings.

2. A method of manufacturing rear axlecase according to claim 1 characterized by:
   forming a casting mold so as to produce an integral casting comprising the differential gear housing and the axle housings;
   pouring thereinto nodular graphite cast iron; and after
   completion of casting, performing the high frequency quenching on the endtube parts of said axle housings.

5

3. A method of manufacturing rear axlecase according to claim 2 by subsequent performing annealing treatment on the whole body.

4. A method of manufacturing rear axlecase according to claim 3, in which aforesaid annealing treatment is performed at a temperature below the A, transforming point.

5. A method of manufacturing rear axlecase according to claim 2 characterized by:
after completion of casting, performing annealing treatment on the whole body; and
subsequent thereto, performing the high frequency quenching treatment on the endtube parts of said axle housings.

**Revendications**

1. Carter d'essieu arrière caractérisé par une structure dans laquelle :
les logements d'engrenage différentiel et le logement d'essieu sont moulés à partir d'une fonte à graphite nodulaire en une pièce moulée d'un seul tenant ; et
une partie de structure durcie est formée par trempe à haute fréquence dans chacune des parties tubulaires d'extrémité des logements d'essieu mentionnés ci-dessus.

2. Procédé de fabrication d'essieu arrière selon la revendication 1, caractérisé par :
la formation d'un moule de fonderie de manière à produire une pièce moulée d'un seul tenant constituant le logement d'engrenage différentiel et les logements d'essieu ;
la coulée, dans celui-ci, de fonte à graphite nodulaire ; et, après achèvement de la pièce moulée, exécution de la trempe à haute fréquence sur les parties tubulaires d'extrémité desdits logements d'essieu.

3. Procédé de fabrication d'essieu arrière selon la revendication 2, caractérisé par l'exécution subséquente d'un traitement de recuit sur la totalité du corps.

4. Procédé de fabrication d'essieu arrière selon la revendication 3, dons lequel le traitement de recuit mentionné ci-dessus est effectué à une température au-dessous du point de transformation A.

5. Procédé de fabrication d'essieu arrière selon la revendication 2, caractérisé par : après l'achèvement de la pièce moulée, l'exécution d'un traitement de recuit sur la totalité du corps ; et
à la suite de celui-ci, l'exécution du traitement de trempe à haute fréquence sur les parties tubulaires d'extrémité desdits logements d'essieu.

**Patentansprüche**

1. Hinterachsgehäuse, gekennzeichnet durch einen Aufbau, bei welchem
die Differentialgehäuse und die Achsgehäuse aus Sphäroguß als einstückiges Gußstück gegossen sind;
und daß ein gehärtetes Formteil durch Hochfrequenzhärten in jedem der rohrförmigen Endstücke oder Achsgehäuse ausgebildet ist.

2. Verfahren zur Herstellung eines Hinterachsgehäuses nach Anspruch 1,
**dadurch gekennzeichnet, daß**
eine Gußform so geformt wird, dap ein einstückiges Gußstück hergestellt wird, welches das Differentialgehäuse und die Achsgehäuse umfaßt;
Sphäroguß in diese gegossen wird; und
nach dem Gießen die rohrförmigen Endstücke der Achsgehäuse einer Hochfrequenzhärtebehandlung unterzogen werden.

3. Verfahren zur Herstellung eines Hinterachsgehäuses nach Anspruch 2,
**dadurch gekennzeichnet, daß**
der gesamte Körper anschließend einer Glühbehandlung unterzogen wird.

4. Verfahren zur Herstellung von Hinterachsgehäusen nach Anspruch 3,
**dadurch gekennzeichnet, daß**

die Glühbehandlung bei einer Temperatur unterhalb des Umwandlungspunktes A durchgeführt wird.

5. Verfahren zur Herstellung eines Hinterachsgehäuses nach Anspruch 2,
   **dadurch gekennzeichnet, daß**
   nach dem Gießen der gesamte Körper einer Glühbehandlung unterzogen wird;
   und anschließend die rohrförmigen Endstücke der Achsgehäuse einer Hochfrequenzhärtebehandlung unterzogen werden.

# FIG.1

EP 0 273 355 B1

# FIG.2

# FIG.3

a b c d               e f g h

ASTM   A536-84

| 100-70-03 | 65-45-12 | 60-40-18 | 65-45-12 | 100-70-03 |

# FIG.4

T.P.

EP 0 273 355 B1

FIG.5

FIG.6

MEASURING
POINTS

i ——o——
j ——□——
k ——×——
ℓ ——△——

HARDNESS (HʀC)

DEPTH FROM SURFACE (mm)

EP 0 273 355 B1

FIG.7

FIG.8